# EUROPÄISCHE PATENTSCHRIFT

(11) **EP 4 370 986 B1**
(45) Veröffentlichungstag und Bekanntmachung des Hinweises auf die Patenterteilung: **04.06.2025**
(21) Anmeldenummer: 22786823.9
(22) Anmeldetag: 03.10.2022
(51) Int. Cl.: G05B 19/418

(54) **LEITSYSTEM FÜR EINE TECHNISCHE ANLAGE MIT VERKLEINERTEN ANSICHTEN VON ANLAGENBILDERN**
CONTROL SYSTEM FOR A TECHNICAL INSTALLATION WITH SCALED DOWN VIEWS OF SYSTEM IMAGES
SYSTÈME DE COMMANDE POUR UNE INSTALLATION TECHNIQUE À DES VUES RÉDUITES DES IMAGES DE L'INSTALLATION

(30) Priorität: 05.10.2021 EP 21201042
(43) Veröffentlichungstag der Anmeldung: 22.05.2024
(73) Patentinhaber: Siemens Aktiengesellschaft, 80333 München (DE)
(72) Erfinder: LUTZ, Benjamin, 76327 Pfinztal (DE)
(74) Vertreter: Siemens Patent Attorneys
(86) Internationale Anmeldenummer: PCT/EP2022/077431
(87) Internationale Veröffentlichungsnummer: WO 2023/057365

(56) Entgegenhaltungen:
- EP-A1- 3 623 891
- US-A1- 2021 081 080

## Beschreibung

Die Erfindung betrifft ein Leitsystem für eine technische Anlage, insbesondere Prozess- oder Fertigungsanlage, das einen Operator Station Server und einen Operator Station Client aufweist, wobei der Operator Station Server dazu ausgebildet ist, Visualisierungsinformationen zu erzeugen und zur Visualisierung an den Operator Station Client zu übertragen, um ein Bedienen und Beobachten der technischen Anlage durch einen Operator zu ermöglichen, wobei die Visualisierungsinformationen wenigstens ein erstes und ein zweites, von dem ersten Anlagenbild verschiedenes Anlagenbild der technischen Anlage umfassen, in welchen digitale Repräsentationen von Komponenten der technischen Anlage und dazugehörige Daten für das Bedienen und Beobachten der technischen Anlage visuell dargestellt oder darstellbar sind, wobei die digitalen Repräsentationen des ersten Anlagenbildes sich von den digitalen Repräsentationen des zweiten Anlagenbildes unterscheiden. Außerdem betrifft die Erfindung ein Verfahren zum Betreiben eines Leitsystems für eine technische Anlage, insbesondere Prozess- oder Fertigungsanlage.

Die Bedienung und Beobachtung (verfahrens-)technischer Anlagen erfolgt durch Anlagenbilder, in denen der verfahrenstechnische Prozess durch Bildelemente schematisch dargestellt wird, welche wiederum durch Prozesswerte und Alarme dynamisiert werden. Durch ein Alarmmanagement werden Operatoren der technischen Anlage zu den Anlagenbildern geführt, in denen die Bildelemente der alarmgebenden Prozessobjekte visualisiert werden.

Für eine detailliertere Beobachtung und Bedienung können Operatoren in Anlagenbildern so genannte Detailansichten - wie etwa Trendkurven, Faceplates von Prozessobjekten, Meldefolgeanzeigen, usw. - öffnen. Werden während einer detaillierten Bedienung oder Beobachtung in einem geöffneten Anlagenbild nun Alarme aus anderen Anlagenbildern gemeldet, muss der Operator entscheiden, ob er seine begonnene Bedienung und Beobachtung unterbricht, um sich um die gemeldeten Alarme zu kümmern, oder ober er die Bedienung und Beobachtung zuerst beendet.

Unterbricht der Operator seine gegenwärtige Bedienung und Beobachtung - sofern dies überhaupt möglich ist -, hat er durch die Anlagenbildwechsel Mühe und Aufwand zum Zustand des Anlagenbildes vor der Unterbrechung zurückzukehren. Dies ist dann besonders nachteilhaft, wenn er wegen dem aufkommenden Alarm - weil z.B. von niedriger Kritikalität - seine angefangene Tätigkeit erst gar nicht hätte unterbrechen müssen. Die zuvor beschriebene Führung durch das Alarmmanagement kann demnach auch nachteilhaft sein, wenn Operatoren durch neu gemeldete Alarme ihre Tätigkeiten wegen Anlagenbildwechsel zum alarmmeldenden Anlagenbild unterbrechen müssen, auch wenn die Behandlung des aufgetretenen Alarms hätte aufgeschoben werden können.

Bekannte Leitsysteme, die einem Operator Anlagenbilder mit verschiedenen Objekten mittels mehrere Operator Station Server darbieten, sind beispielsweise in der EP 3 637 205 A1 und der EP 3 736 647 A1 offenbart.

In der US 2021/081080 A1 wird ein System mit einer grafischen Nutzerschnittstelle offenbart, um Vollbild-Anlagenbilder auf mobilen Endgeräten grafisch darzustellen.

Die EP 3 623 891 A1 offenbart einen Individualisierungsdienst zur Implementierung in einem Leitsystem einer technischen Anlage.

Der Erfindung liegt die Aufgabe zugrunde, ein Leitsystem für eine technische Anlage anzugeben, das eine verbesserte Bedienung und Beobachtung der technischen Anlage ermöglicht.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch ein Verfahren zum Betreiben eines Leitsystems für eine technische Anlage, insbesondere Prozess- oder Fertigungsanlage, mit den Merkmalen des Anspruchs 11. Vorteilhafte Weiterbildungen ergeben sich aus den abhängigen Ansprüchen.

Ein Leitsystem eingangs beschriebener Art ist erfindungsgemäß dadurch gekennzeichnet, dass dazu ausgebildet ist, während der visuellen Darbietung des ersten Anlagenbildes an den Operator durch den Operator Station Client, bedingt durch ein eintretendes Ereignis, das zweite Anlagenbild durch den Operator Station Client dem Operator visuell darzubieten, wobei eine Darstellungsgröße des zweiten Anlagenbildes vorzugsweise kleiner als eine Darstellungsgröße des ersten Anlagenbildes ist, wobei die Darstellungsgröße eine Anzahl von Pixeln eines Bildschirms ist, die von dem Operator Station Client zur visuellen Darstellung der Anlagenbilder verwendet wird.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem Operator Station Server und dem Operator Station Client weitere Komponenten, wie beispielsweise sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive des Leitsystems für die technische Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an wenigstens den Operator Station Client weiter, der zur Bedienung und Beobachtung eines Betriebs der einzelnen Funktionselemente der technischen Anlage verwendet werden kann.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der Anlage. Hierzu kann der Operator das Bedien- und Beobachtungssystem des Leitsystems mit den Operator Station Servern und den Operator Station Client nutzen.

Bei den Daten der technischen Anlage kann es sich, im Fall einer Prozessanlage, um Prozessdaten wie Druckwerte, Temperaturwerte oder Füllstandswerte, aber beispielsweise auch um Meldungen handeln. Die Daten können Rohdaten von Sensoren darstellen. Sie können aber auch durch einen Messumformer, ein Peripheriegerät, ein Automatisierungsgerät oder ein sonstiges, hierfür ausgebildetes Gerät verarbeitet worden sein.

Der Operator kann das (erste) Anlagenbild und das (zweite) Anlagenbild (und ggf. weitere Anlagenbilder), die ihm auf dem Operator Station Client visuell dargeboten werden, für die Bedienung und Beobachtung der technischen Anlage verwenden. In den Anlagenbildern kann beispielsweise ein verfahrenstechnischer Prozess schematisch visualisiert und durch Blocksymbole (digitale Repräsentationen) der einzelnen Prozessobjekte, mit denen der verfahrenstechnische Prozess automatisiert wird, dynamisiert werden. Eine Bedienung des verfahrenstechnischen Prozesses kann dabei unter anderem durch sogenannte Faceplates möglich sein, die z.B. über die dynamisierten Blocksymbole geöffnet werden können.

Das erfindungsgemäße Leitsystem ist in vorteilhafter Weise dazu ausgebildet, auf das Eintreten eines Ereignisses hin dem Operator eine visuelle Darstellung eines zweiten Anlagenbildes darzubieten. Dabei ist wesentlich, dass sich eine Darstellungsgröße des ersten Anlagenbildes von einer Darstellungsgröße des zweiten Anlagenbildes unterscheidet. Der Begriff "Darstellungsgröße" meint dabei beispielweise eine Anzahl von Pixeln eines Bildschirms, die zur visuellen Darstellung der Anlagenbilder verwendet wird. Durch die sich unterscheidenden Darstellungsgrößen kann der Operator direkt eine Übersicht über das (aus verschiedenen Gründen möglicherweise relevante) zweite Anlagenbild erhalten, ohne dass hierfür das erste Anlagenbild nicht mehr dargestellt werden würde.

Befindet sich der Operator bei der Bedienung und Beobachtung in dem geöffneten ersten Anlagenbild, ist er bei dem erfindungsgemäßen Leitsystem nicht mehr dazu gezwungen, (vollständig) zu dem zweiten Anlagenbild zu wechseln (und damit das erste Anlagenbild zu schließen), um beurteilen zu können, ob das eingetretene Ereignis ein unmittelbares Handeln erfordert oder ob ein Handeln noch aufgeschoben werden kann, bis der Operator die Bedienung und Beobachtung in dem ersten Anlagenbild abgeschlossen hat. Das erfindungsgemäße Leitsystem kann ihm eine Übersicht über das zweite Anlagenbild bereitstellen, ohne dass hierfür die Bedienung und Beobachtung des ersten Anlagebildes beendet werden müsste.

Bevorzugt ist die Darstellungsgröße des zweiten Anlagenbildes kleiner als die Darstellungsgröße des ersten Anlagenbildes. Das zweite Anlagenbild kann hierbei in Form einer Miniaturansicht dem ersten Anlagenbild überlagert werden. Dies kann besonders bevorzugt in Form eines (zusätzlichen) Bildfensters erfolgen, in welchem das zweite Anlagenbild darstellbar bzw. dargestellt ist. Dieses Bildfenster kann der Operator verschieben, um es an eine für ihn passende Position auf einer Anzeige des Operator Station Clients zu verschieben.

Bei dem Ereignis kann es sich um eine von dem Operator erteilte Anweisung handeln. Diese Anweisung kann beispielsweise in Form eines Mausklicks, einer Berührung eines berührungsempfindlichen Bildschirms oder einer Sprachanweisung erteilt worden sein. Die Initiative geht dabei von dem Operator aus, der wiederum selbst auf das Eintreten eines Ereignisses hin, beispielsweise das Aufkommen einer Alarmmeldung, die Anweisung an das Leitsystem erteilt, das zweite Anlagenbild in der zuvor beschriebenen Art und Weise darzustellen.

Bevorzugt handelt es sich bei dem Ereignis dabei um das Auswählen des zweiten Anlagenbildes (genauer: eines Symbols oder Icons, welches auf das zweite Anlagenbild referenziert ist) aus einer Listendarstellung der (wenigstens) zwei Anlagenbilder. Dabei kann das zweite Anlagenbild in der Listendarstellung mit einer in der technischen Anlage aufgekommenen Meldung, insbesondere einer Alarmmeldung, versehen sein. Der Operator kann beim Bedienen und Beobachten in der Listendarstellung erkennen, dass eine Alarmmeldung in dem zweiten Anlagenbild aufgekommen ist, dieses zweite Anlagenbild in der Listendarstellung auswählen und sich das zweite Anlagenbild anzeigen lassen. Eine Alarmmeldung ist dabei eine Meldung, die eine in der Regel unverzügliche Reaktion des Operators der technischen Anlage erfordert. Unter einer Meldung wird dabei ein Bericht vom Eintreten eines Ereignisses verstanden, das einen Übergang aus einem diskreten Zustand innerhalb der technischen Anlage in einen anderen diskreten Zustand darstellt.

Ein Ereignis kann auch eine in der technischen Anlage aufkommende Meldung sein, insbesondere eine Alarmmeldung. Hier ist grundsätzlich keine Initiative des Operators notwendig. Auf das Aufkommen der Alarmmeldung hin kann das Leitsystem automatisch das zweite Anlagenbild in der zuvor erläuterten Art und Weise darstellen - als "aufpoppendes" Bildfenster. Es ist aber auch möglich, dass das Leitsystem den Operator zunächst fragt, ob er das zweite Anlagenbild dargestellt bekommen möchte. Dieser Zwischenschritt ist insbesondere dann von Vorteil, wenn der Operator zu einem aktuellen Zeitpunkt (noch) keine automatische Darstellung des zweiten Anlagenbildes haben möchte.

Der Operator kann bevorzugt die Eigenschaften vorgeben, die die Meldung aufweisen muss, um die visuelle Darstellung des zweiten Anlagenbildes durch den Operator Station Client auszulösen. Beispielsweise kann er vorgeben, dass nur Meldungen berücksichtigt werden, die eine bestimmte Kritikalität oder eine bestimmte Herkunft aufweisen, oder die nur an den Operator selbst adressiert sind.

Im Rahmen einer bevorzugten Weiterbildung der Erfindung umfasst die visuelle Darstellung des zweiten Anlagenbildes eine Übersicht über Alarmmeldungen, die von dem zweiten Anlagenbild umfassten Komponenten der technischen Anlage zugeordnet sind. Der Operator bekommt hierdurch die unmittelbare Information, welche Alarmmeldungen mit dem zweiten Anlagenbild verknüpft sind. Hierbei kann er beispielsweise eine Übersicht erhalten, wie viele kritische oder unkritische Alarmmeldungen Komponenten zugeordnet sind, die in dem zweiten Anlagenbild dargestellt sind.

Bei einer bevorzugten Weiterbildung der Erfindung umfassen die Visualisierungsinformationen zusätzlich wenigstens ein drittes Anlagenbild der technischen Anlage, wobei das Leitsystem dazu ausgebildet ist, während der visuellen Darbietung des ersten Anlagenbildes durch den Operator Station Client an den Operator, bedingt durch ein eintretendes Ereignis oder bedingt durch mehrere eintretende Ereignisse, das zweite Anlagenbild und das dritte Anlagenbild durch den Operator Station Client dem Operator visuell darzubieten, wobei eine Darstellungsgröße des ersten Anlagenbildes und des zweiten Anlagenbildes, und des ersten Anlagenbildes und des dritten Anlagenbildes voneinander unterschiedlich ausgebildet sind, wobei eine Darstellungsgröße des zweiten Anlagenbildes und des dritten Anlagenbildes vorzugsweise kleiner ist als eine Darstellungsgröße des ersten Anlagenbildes. Dies ist auch für eine beliebige Zahl von weiteren Anlagenbildern möglich.

Die zuvor formulierte Aufgabe wird zudem gelöst durch ein Verfahren zum Betreiben eines Leitsystems für eine technische Anlage, insbesondere Prozess- oder Fertigungsanlage, das einen Operator Station Server und einen Operator Station Client aufweist, wobei der Operator Station Server dazu ausgebildet ist, Visualisierungsinformationen zu erzeugen und zur Visualisierung an den Operator Station Client zu übertragen, um ein Bedienen und Beobachten der technischen Anlage durch einen Operator zu ermöglichen, wobei die Visualisierungsinformationen wenigstens ein erstes und ein zweites, von dem ersten Anlagenbild verschiedenes Anlagenbild der technischen Anlage umfassen, in welchen digitale Repräsentationen von Komponenten der technischen Anlage und dazugehörige Daten für das Bedienen und Beobachten der technischen Anlage visuell dargestellt oder darstellbar sind, wobei die digitalen Repräsentationen des ersten Anlagenbildes sich von den digitalen Repräsentationen des zweiten Anlagenbildes unterscheiden.

Das Verfahren umfasst die folgenden Verfahrensschritte:
a) Visuelle Darbietung des ersten Anlagenbildes durch den Operator Station Client an den Operator;
b) In Reaktion auf ein eintretendes Ereignis, visuelles Darbieten des zweiten Anlagenbildes durch den Operator Station Client an den Operator, wobei eine Darstellungsgröße des ersten Anlagenbildes und des zweiten Anlagenbildes voneinander unterschiedlich ausgebildet sind, wobei eine Darstellungsgröße des zweiten Anlagenbildes vorzugsweise kleiner ist als eine Darstellungsgröße des ersten Anlagenbildes, wobei die Darstellungsgröße eine Anzahl von Pixeln eines Bildschirms ist, die von dem Operator Station Client zur visuellen Darstellung der Anlagenbilder verwendet wird.

Bevorzugt wird das zweite Anlagenbild dabei in einem Bildfenster dargestellt, welches als durch den Operator auf einer durch den Operator Station Client visuell dargestellten Bildanzeige verschiebbar ausgebildet ist.

Die visuelle Darstellung des zweiten Anlagenbildes umfasst bevorzugt eine Übersicht über Alarmmeldungen, die von dem zweiten Anlagenbild umfassten Komponenten der technischen Anlage zugeordnet sind.

Die zuvor erläuterte Aufgabe wird zudem durch die Verwendung eines Leitsystems zum Betrieb einer technischen Anlage, insbesondere Fertigungs- oder Prozessanlage, gelöst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: ein erstes Anlagenbild mit einem überlagerten zweiten Anlagenbild;
- FIG 2: das zweite Anlagenbild aus FIG 1 in einer vergrößerten Ansicht;
- FIG 3: das erste Anlagenbild aus FIG 2 mit dem überlagerten zweiten Anlagenbild und einem überlagerten dritten Anlagenbild; und
- FIG 4: ein erfindungsgemäßes Leitsystem in einer Prinzipskizze.

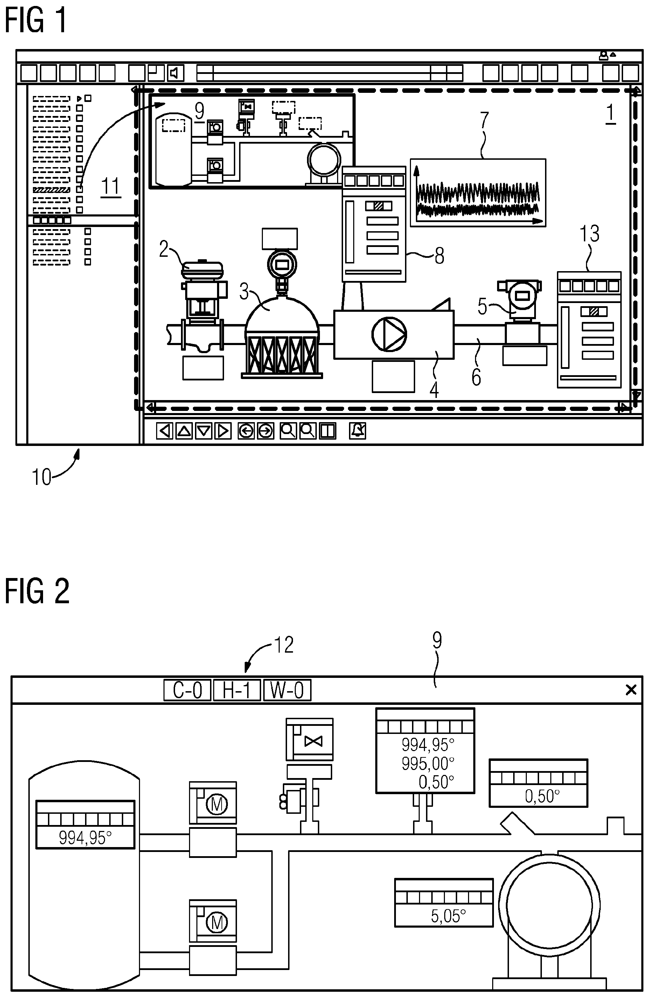

In FIG 1 ist ein erstes Anlagenbild 1 einer als verfahrenstechnischen Anlage ausgebildeten technischen Anlage dargestellt. Das erste Anlagenbild 1 umfasst verschiedene Bildobjekte 2, 3, 4, 5, die jeweils eine Prozesskomponente der verfahrenstechnischen Anlage visualisieren bzw. eine digitale Repräsentation dieser Prozessobjekte darstellen. Zu erkennen sind Rohrleitungen 6, die die einzelnen Prozesskomponenten miteinander verbinden.

Darüber hinaus umfasst das erste Anlagenbild 1 ein Diagramm 7 mit Messwerten der verfahrenstechnischen Anlage sowie verschiedene Oberflächen 8, 9 zum Bedienen und Beobachten der einzelnen Prozessobjekte. Das erste Anlagenbild 1 wird in einem linken oberen Bereich von einem zweiten Anlagenbild 9 überlagert, welches in einem verschiebbaren Bildfenster dargestellt ist. Beide Anlagenbilder 1, 9 sind in einer Darstellungsumgebung 10 eines Operator Station Clients eines Leitsystems der verfahrenstechnischen Anlage dargestellt. Das erste Anlagenbild 1 ist in FIG 1 durch eine gestrichelte Linie, das zweite Anlagenbild 9 durch Kreuzsymbole gekennzeichnet.

Auf der linken Seite von FIG 1 weist die Darstellungsumgebung 10 eine Listendarstellung 11 der Anlagenbilder 1, 9 auf. Bei dem Aufkommen einer Alarmmeldung in der verfahrenstechnischen Anlage wird in der Listendarstellung 11 die Alarmmeldung angezeigt. Daraufhin kann der Operator das betreffende (zweite) Anlagenbild 9 in der Listendarstellung 11 anwählen und dadurch die in FIG 1 zu erkennende visuelle Darstellung des zweiten Anlagenbildes 9 durch den Operator Station Client bewirken. Es ist gut zu erkenne, dass eine Darstellungsgröße des zweiten Anlagenbildes 9 kleiner als eine Darstellungsgröße des ersten Anlagenbildes 1 ist.

In FIG 2 ist das zweite Anlagenbild 9 in einer Vergrößerung dargestellt. Es weist grundsätzlich vergleichbare Elemente wie das erste Anlagenbild 1 auf, weshalb diese an dieser Stelle nicht näher erörtert werden. In einem oberen Bereich 12 ist eine Übersicht über Alarmmeldungen dargestellt, die von dem zweiten Anlagenbild 9 umfasste Komponenten der verfahrenstechnischen Anlage zugordnet sind. In dem vorliegenden Ausführungsbeispiel ist einer der Komponenten eine Alarmmeldung zugeordnet, die die Eigenschaft "kritisch" aufweist (was in FIG 2 durch die Bezeichnung "H-1" verdeutlicht ist).

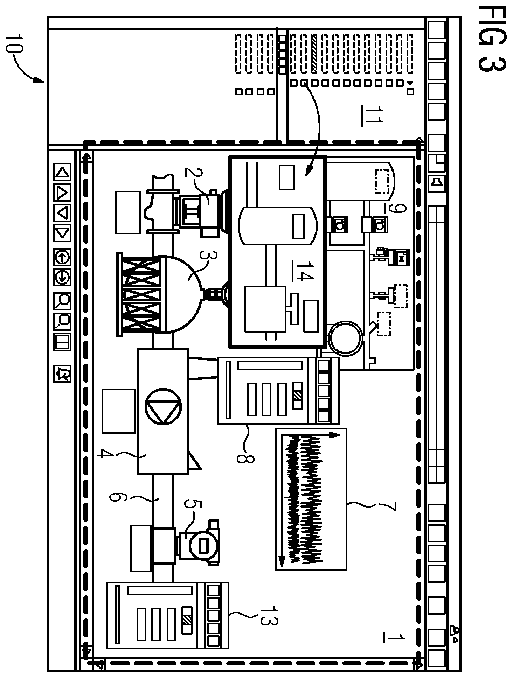

FIG 3 zeigt das erste Anlagenbild 1 zusammen mit dem überlagerten zweiten Anlagenbild 9 (vgl. FIG 1). Im Gegensatz zu der Ausführungsform gemäß FIG 1 ist dem ersten Anlagenbild 1 noch ein drittes Anlagenbild 14 in Form eines Bildfensters überlagert. Auch dieses Bildfenster kann als vom Operator verschiebbar ausgebildet sein.

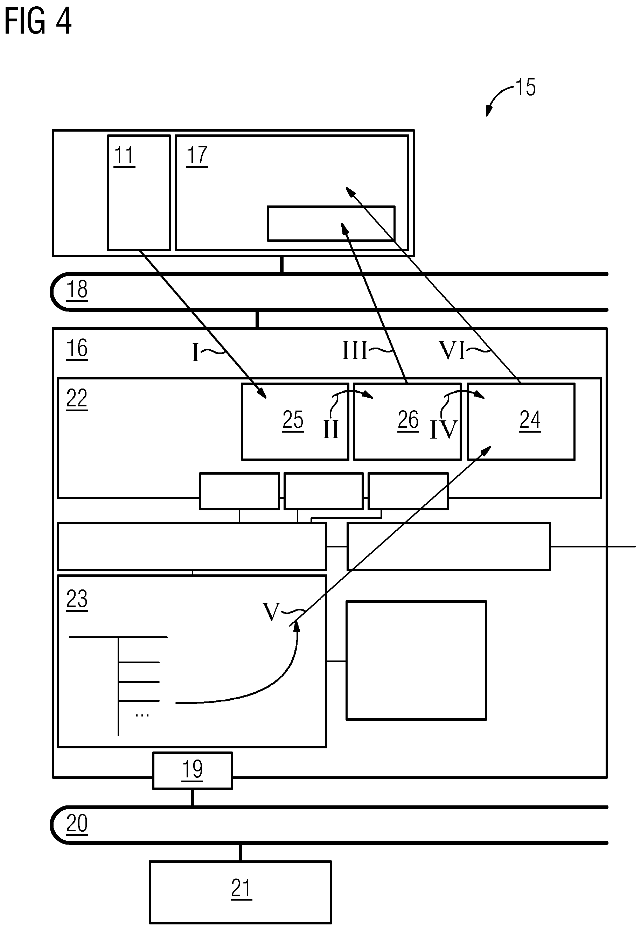

In FIG 4 ist ein Teil eines erfindungsgemäßen Leitsystems 15 einer als Prozessanlage, d.h. als verfahrenstechnische Anlage, ausgebildeten technischen Anlage dargestellt. Das Leitsystem 15 umfasst einen Operator Station Server 16 und einen Operator Station Client 17.

Der Operator Station Server 16 und der Operator Station Client 17 sind über einen Terminalbus 18 miteinander und optional mit nicht dargestellten weiteren Komponenten des Leitsystems 15 wie einem Engineering Station Server verbunden.

Ein Benutzer bzw. Operator kann zum Zwecke des Bedienens und Beobachtens über den Operator Station Client 17 mittels des Terminalbus 18 auf den Operator Station Server 16 zugreifen. Der Terminalbus 18 kann, ohne sich darauf zu beschränken, beispielsweise als Industrial Ethernet ausgebildet sein.

Der Operator Station Server 16 weist eine Geräteschnittstelle 19 auf, die mit einem Anlagenbus 20 verbunden ist. Über diese Geräteschnittstelle 19 kann der Operator Station Server 16 mit einem Automatisierungsgerät 21 sowie mit optional vorhandenen weiteren Komponenten der Prozessanlage wie Peripheriegeräten (nicht dargestellt) kommunizieren. Der Anlagenbus 20 kann, ohne sich darauf zu beschränken, beispielsweise als Industrial Ethernet ausgebildet sein. Das Automatisierungsgerät 21 kann mit einer beliebigen Anzahl an Subsystemen (nicht dargestellt) verbunden sein.

Auf dem Operator Station Server 16 sind (unter anderem) ein Visualisierungsdienst 22 und ein Prozessabbild 23 implementiert. Der Operator Station Client 17 ist dazu ausgebildet, Anlagenbilder zum Bedienen und Beobachten der Prozessanlage darzustellen. Das Automatisierungsgerät 21 ist dazu ausgebildet, eine Automatisierung der Prozessanlage zu steuern und zu überwachen. Hierzu ist auf dem Automatisierungsgerät 21 ein Steuerprogramm implementiert, welches im Rahmen einer Projektierung der Automatisierung der Prozessanlage auf das Automatisierungsgerät 21 geladen worden ist. Das Automatisierungsgerät 21 empfängt Prozessdaten (z.B. Messwerte) aus der Prozessanlage und überträgt diese an das Prozessabbild 23 des Operator Station Servers 16.

Ein spezialisierter Anzeigendienst 24 des Visualisierungsdienstes 22 des Operator Station Servers 16 erzeugt das erste Anlagenbild 1 (vgl. FIG 1 und 3), das zur Visualisierung an den Operator Station Client 17 übertragen wird. Wie anhand FIG 1 beschrieben, kann der Operator von sich aus (oder alternativ das Leitsystem 15 automatisch) die visuelle Darstellung des zweiten Anlagenbildes 9 triggern. Hierzu kann der Operator das zweite Anlagenbild in der Listendarstellung 11 der Anlagenbilder 1, 9 anwählen (Schritt I). Ein Empfangsdienst 25 des Operator Station Servers 16 empfängt die Anweisung des Operators und gibt sie an einen Objektdienst 26 weiter (Schritt II). Dieser Objektdienst 26 überträgt die Visualisierungsinformation bezüglich des zweiten Anlagenbildes 9 an den Operator Station Client 17, damit dieser das zweite Anlagenbild 9 dem ersten Anlagenbild 1 überlagert (Schritt III).

Zusätzlich übermittelt der Objektdienst 26 dem Anzeigendienst 24 die Anweisung, eine alarmaufschlüsselnde Übersicht über Alarmmeldungen zu erzeugen, die dem Operator eine unmittelbare Übersicht über die Alarmmeldungen ermöglicht, die dem zweiten Anlagenbild 9 zugeordnet sind (Schritt IV). Der Anzeigendienst 24 greift zur Erzeugung dieser Übersicht auf das Prozessabbild 23 zu, in welchem hinterlegt ist, welchem Prozessobjekt welche Alarmmeldung (mit welcher Eigenschaft) aufweist (Schritt V). Durch die Kenntnis des Anzeigendienstes 24, welche Prozessobjekte dem zweiten Anlagenbild 9 zugeordnet sind, kann der Anzeigendienst 24 auch die Alarmmeldungen entsprechend dem zweiten Anlagenbild 9 zuordnen und die alarmaufschlüsselnde Übersicht erzeugen. Diese wird dann an den Operator Station Client 17 übertragen (Schritt VI) und von diesem gemeinsam mit dem zweiten Anlagenbild 9 visuell dargestellt.

Durch die alarmaufgeschlüsselten Miniaturansichten (zweites Anlagenbild 9 und drittes Anlagenbild 14) kann der Operator seine Bedienung und Beobachtung besser priorisieren. Unnötige Bildwechsel und Unterbrechungen der Bearbeitung bestehender Aufgaben können mit dem zuvor erläuterten Leitsystem 15 effektiv vermieden werden.

Durch die Erfindung kann daher ein wesentlicher Beitrag für eine verbesserte Bedienbarkeit des Leitsystems einer technischen Anlage geleistet werden.

## Patentansprüche

1. Leitsystem (15) für eine technische Anlage, insbesondere Prozess- oder Fertigungsanlage, das wenigstens einen Operator Station Server (16) und wenigstens einen Operator Station Client (17) aufweist, wobei der Operator Station Server (16) dazu ausgebildet ist, Visualisierungsinformationen zu erzeugen und zur Visualisierung an den Operator Station Client (17) zu übertragen, um ein Bedienen und Beobachten der technischen Anlage durch einen Operator zu ermöglichen, wobei die Visualisierungsinformationen wenigstens ein erstes Anlagenbild (1) und ein zweites Anlagenbild (9) der technischen Anlage umfassen, in welchen digitale Repräsentationen (2, 3, 4, 5, 6) von Komponenten der technischen Anlage und dazugehörige Messdaten (7, 8, 9) für das Bedienen und Beobachten der technischen Anlage visuell dargestellt oder darstellbar sind,
**dadurch gekennzeichnet, dass**
das Leitsystem (15) dazu ausgebildet ist, während der visuellen Darbietung des ersten Anlagenbildes (1) an den Operator durch den Operator Station Client (17), bedingt durch ein eintretendes Ereignis, das zweite Anlagenbild (9) durch den Operator Station Client (17) dem Operator visuell darzubieten, wobei eine Darstellungsgröße des ersten Anlagenbildes (1) und des zweiten Anlagenbildes (9) voneinander unterschiedlich ausgebildet sind, und wobei eine Darstellungsgröße des zweiten Anlagenbildes (9) vorzugsweise kleiner ist als eine Darstellungsgröße des ersten Anlagenbildes (1).

2. Leitsystem (15) nach Anspruch 1, bei dem ein Ereignis eine von dem Operator erteilte Anweisung darstellt.

3. Leitsystem (15) nach Anspruch 2, bei dem das Ereignis ein Auswählen des zweiten Anlagenbildes (9) aus einer Listendarstellung (11) der Anlagenbilder darstellt.

4. Leitsystem (15) nach Anspruch 3, bei dem das zweite Anlagenbild (9) in der Listendarstellung (11) mit einer in der technischen Anlage aufkommenden Meldung, insbesondere einer Alarmmeldung, versehen ist.

5. Leitsystem (15) nach Anspruch 1, bei dem ein Ereignis eine in der technischen Anlage aufkommende Meldung, insbesondere eine Alarmmeldung, darstellt.

6. Leitsystem (15) nach Anspruch 5, bei dem vorgebbar ist, welche Eigenschaften die Meldung aufweisen muss, um die visuelle Darstellung des zweiten Anlagenbildes (9) durch den Operator Station Client (17) auszulösen.

7. Leitsystem (15) nach einem der vorangegangenen Ansprüche, bei dem das zweite Anlagenbild (9) in einem Bildfenster darstellbar ist, welches als durch den Operator auf einer durch den Operator Station Client (17) visuell dargestellten Bildanzeige verschiebbar ausgebildet ist.

8. Leitsystem (15) nach einem der vorangegangenen Ansprüche, bei dem die visuelle Darstellung des zweiten Anlagenbildes (9) eine Übersicht (12) über Alarmmeldungen umfasst, die von dem zweiten Anlagenbild (9) umfassten Komponenten der technischen Anlage zugeordnet sind.

9. Leitsystem (15) nach Anspruch 8, bei dem die Übersicht (12) eine jeweilige Anzahl von Alarmmeldungen einer bestimmten Alarmklasse umfasst.

10. Leitsystem (15) nach einem der vorangegangenen Ansprüche, bei dem die Visualisierungsinformationen zusätzlich wenigstens ein drittes Anlagenbild (14) der technischen Anlage umfassen, wobei das Leitsystem (15) dazu ausgebildet ist, während der visuellen Darbietung des ersten Anlagenbildes (1) durch den Operator Station Client (17) an den Operator, bedingt durch ein eintretendes Ereignis oder bedingt durch mehrere eintretende Ereignisse, das zweite Anlagenbild (9) und das dritte Anlagenbild (14) durch den Operator Station Client (17) dem Operator visuell darzubieten, wobei eine Darstellungsgröße des ersten Anlagenbildes (1) und des zweiten Anlagenbildes (9), und des ersten Anlagenbildes (1) und des dritten Anlagenbildes (14) voneinander unterschiedlich ausgebildet sind, wobei eine Darstellungsgröße des zweiten Anlagenbildes (9) und des dritten Anlagenbildes (14) vorzugsweise kleiner ist als eine Darstellungsgröße des ersten Anlagenbildes (1).

11. Verfahren zum Betreiben eines Leitsystems (15) für eine technische Anlage, insbesondere Prozess- oder Fertigungsanlage, das wenigstens einen Operator Station Server (16) und wenigstens einen Operator Station Client (17) aufweist, wobei der Operator Station Server (16) dazu ausgebildet ist, Visualisierungsinformationen zu erzeugen und zur Visualisierung an den Operator Station Client (17) zu übertragen, um ein Bedienen und Beobachten der technischen Anlage durch einen Operator zu ermöglichen, wobei die Visualisierungsinformationen wenigstens ein erstes Anlagenbild (1) und ein zweites Anlagenbild (9) der technischen Anlage umfassen, in welchen digitale Repräsentationen (2, 3, 4, 5, 6) von Komponenten der technischen Anlage und dazugehörige Messdaten (7, 8, 9) für das Bedienen und Beobachten der technischen Anlage visuell dargestellt oder darstellbar sind, das Verfahren umfassend:
a) Visuelle Darbietung des ersten Anlagenbildes (1) durch den Operator Station Client (17) an den Operator;
b) In Reaktion auf ein eintretendes Ereignis, visuelles Darbieten des zweiten Anlagenbildes (9) durch den Operator Station Client (17) an den Operator, wobei eine Darstellungsgröße des ersten Anlagenbildes (1) und des zweiten Anlagenbildes (9) voneinander unterschiedlich ausgebildet sind, wobei eine Darstellungsgröße des zweiten Anlagenbildes (9) vorzugsweise kleiner ist als eine Darstellungsgröße des ersten Anlagenbildes (1).

12. Verfahren nach Anspruch 11, bei dem ein Ereignis eine von dem Operator empfangene Anweisung darstellt.

13. Verfahren nach Anspruch 11, bei dem ein Ereignis eine in der technischen Anlage aufkommende Meldung, insbesondere eine Alarmmeldung, darstellt.

14. Verfahren nach einem der Ansprüche 11 bis 13, bei dem das zweite Anlagenbild (9) in einem Bildfenster dargestellt wird, welches als durch den Operator auf einer durch den Operator Station Client (17) visuell dargestellten Bildanzeige verschiebbar ausgebildet ist.

15. Verfahren nach einem der Ansprüche 11 bis 14, bei dem die visuelle Darstellung des zweiten Anlagenbildes (9) eine Übersicht (12) über Alarmmeldungen umfasst, die von dem zweiten Anlagenbild (9) umfassten Komponenten der technischen Anlage zugeordnet sind.

## Claims

1. Control system (15) for a technical installation, in particular a process installation or production facility, which has at least one operator station server (16) and at least one operator station client (17), wherein the operator station server (16) is designed to generate visualisation information and transmit it to the operator station client (17) for visualisation in order to enable an operator to control and monitor the technical installation, wherein the visualisation information comprises at least one first installation image (1) and a second installation image (9) of the technical installation, in which digital representations (2, 3, 4, 5, 6) of components of the technical installation and associated measurement data (7, 8, 9) for operator control and monitoring of the technical installation are or can be visually displayed,
**characterised in that**
as the result of an event occurring during the visual presentation of the first installation image (1) to the operator by the operator station client (17), the control system (15) is designed to visually present the second installation image (9) to the operator by means of the operator station client (17), wherein a display size of the first installation image (1) and the second installation image (9) are designed as different from one another, and wherein a display size of the second installation image (9) is preferably smaller than a display size of the first installation image (1).

2. Control system (15) according to claim 1, wherein an event represents an instruction issued by the operator.

3. Control system (15) according to claim 2, wherein the event represents selecting of the second installation image (9) from a list display (11) of the installation images.

4. Control system (15) according to claim 3, wherein the second installation image (9) is provided in the list display (11) with a message occurring in the technical installation, in particular an alarm message.

5. Control system (15) according to claim 1, wherein an event represents a message occurring in the technical installation, in particular an alarm message.

6. Control system (15) according to claim 5, wherein it is possible to predefine the properties that the message must possess in order to trigger the visual display of the second installation image (9) by the operator station client (17).

7. Control system (15) according to one of the preceding claims, wherein the second installation image (9) can be displayed in an image window which is designed to be movable by the operator on an image display visually displayed by the operator station client (17).

8. Control system (15) according to one of the preceding claims, wherein the visual display of the second installation image (9) comprises an overview (12) of alarm messages which are assigned to components of the technical installation that are comprised by the second installation image (9).

9. Control system (15) according to claim 8, wherein the overview (12) comprises a respective number of alarm messages of a particular alarm class.

10. Control system (15) according to one of the preceding claims, wherein the visualisation information additionally comprises at least one third installation image (14) of the technical installation, wherein, as the result of an event occurring or as the result of a plurality of events occurring during the visual presentation of the first installation image (1) to the operator by the operator station client (17), the control system (15) is designed to visually present the second installation image (9) and the third installation image (14) to the operator by means of the operator station client (17), wherein a display size of the first installation image (1) and of the second installation image (9), and of the first installation image (1) and of the third installation image (14) are designed as different from one another, wherein a display size of the second installation image (9) and of the third installation image (14) is preferably smaller than a display size of the first installation image (1).

11. Method for operating a control system (15) for a technical installation, in particular a process installation or production facility, which comprises at least one operator station server (16) and at least one operator station client (17), wherein the operator station server (16) is designed to generate visualisation information and to transmit it to the operator station client (17) for visualisation, in order to enable operator control and monitoring of the technical installation, wherein the visualisation information comprises at least one first installation image (1) and a second installation image (9) of the technical installation, in which digital representations (2, 3, 4, 5, 6) of components of the technical installation and associated measurement data (7, 8, 9) for operator control and monitoring of the technical installation are or can be visually represented, the method comprising:
(a) visual presentation of the first installation image (1) to the operator by the operator station client (17); b) in response to an event occurring, visual presentation of the second installation image (9) to the operator by the operator station client (17), wherein a display size of the first installation image (1) and of the second installation image (9) are different from one another, wherein a display size of the second installation image (9) is preferably smaller than a display size of the first installation image (1).

12. Method according to claim 11, wherein an event represents an instruction received from the operator.

13. Method according to claim 11, wherein an event represents a message, in particular an alarm message, occurring in the technical installation.

14. Method according to one of claims 11 to 13, wherein the second installation image (9) is displayed in an image window which is designed to be movable by the operator on an image display visually displayed by the operator station client (17).

15. Method according to one of claims 11 to 14, wherein the visual display of the second installation image (9) comprises an overview (12) of alarm messages associated with components of the technical installation that are comprised by the second installation image (9).

## Revendications

1. Système (15) de commande d'une installation technique, en particulier d'une installation de processus ou de fabrication, qui a au moins un opérateur station serveur (16) et un opérateur station client (17), dans lequel l'opérateur station serveur (16) est constitué pour produire des informations de visualisation et pour les transmettre pour la visualisation à l'opérateur station client (17), afin de rendre possible une commande et une observation de l'installation technique par un opérateur, dans lequel les informations de visualisation comprennent au moins une première image (1) et une deuxième image (9) de l'installation technique, dans lesquelles des représentations (2, 3, 4, 5, 6) numériques de composants de l'installation technique et des données (7, 8, 9) de mesure, qui leur appartiennent, sont représentés visuellement pour la commande et l'observation de l'installation technique ou peuvent l'être,
**caractérisé en ce que**
le système (15) de commande est constitué pour, pendant la représentation visuelle de la première image (1) de l'installation à l'opérateur par l'opérateur station client (17), représenter visuellement à l'opérateur, en raison de l'apparition d'un évènement, la deuxième image (9) de l'installation par l'opérateur station client (17), dans lequel une grandeur de représentation de la première image (1) de l'installation et de la deuxième image (9) de l'installation sont différentes l'une de l'autre, et dans lequel une grandeur de représentation de la deuxième image (9) de l'installation est, de préférence plus petite qu'une grandeur de représentation de la première image (1) de l'installation.

2. Système (15) de commande suivant la revendication 1, dans lequel un évènement représente une instruction donnée par l'opérateur.

3. Système (15) de commande suivant la revendication 2, dans lequel l'évènement représente une sélection de la deuxième image (9) de l'installation dans une représentation (11) en liste des images de l'installation.

4. Système (15) de commande suivant la représentation 3, dans lequel la deuxième image (9) de l'installation dans la représentation (11) en liste est pourvue d'un message, en particulier d'un message d'alerte, arrivant à l'installation technique.

5. Système (15) de commande suivant la revendication 1, dans lequel un évènement représente un message, en particulier un message d'alerte, arrivant à l'installation technique.

6. Système (15) de commande suivant la revendication 5, dans lequel peuvent être prescrites les propriétés que doit avoir le message, afin de déclencher la représentation visuelle de la deuxième image (9) de l'installation par l'opérateur station client (17).

7. Système (15) de commande suivant l'une des revendications précédentes, dans lequel la deuxième image (9) de l'installation peut être représentée dans une fenêtre d'image, qui est constituée déplaçable par l'opérateur sous la forme d'un affichage d'image représenté visuellement par l'opérateur station client (17).

8. Système (15) de commande suivant l'une des revendications précédentes, dans lequel la représentation visuelle de la deuxième image (9) de l'installation comprend une vue (12) d'ensemble par des messages d'alerte, qui sont affectés à l'installation technique par des composants compris par la deuxième image (9) de l'installation.

9. Système (15) de commande suivant la revendication 8, dans lequel la vue d'ensemble (12) comprend un nombre respectif de messages d'alerte d'une classe d'alerte déterminée.

10. Système (15) de commande suivant l'une des revendications précédentes, dans lequel les informations de visualisation comprennent en outre au moins une troisième image (14) de l'installation technique, dans lequel le système (15) de commande est constitué pour, pendant la représentation visuelle à l'opérateur de la première image (1) de l'installation par l'opérateur station client (17), en raison de l'apparition d'un évènement ou en raison de l'apparition de plusieurs évènements, représenter visuellement à l'opérateur la deuxième image (9) de l'installation et la troisième image (14) de l'installation par l'opérateur station client (17), dans lequel une grandeur de représentation de la première image (1) de l'installation et de la deuxième image (9) de l'installation et de la première image (1) de l'installation et de la troisième image (14) de l'installation sont différentes les unes des autres, dans lequel une grandeur de représentation de la deuxième image (9) de l'installation et de la troisième image (14) de l'installation est de préférence plus petite qu'une grandeur de représentation de la première image (1) de l'installation.

11. Procédé pour faire fonctionner un système (15) de commande d'une installation de processus ou de fabrication, qui a au moins un opérateur station serveur (16) et au moins un opérateur station client (17), dans lequel l'opérateur station serveur (16) est constitué pour produire des informations de visualisation et pour les transmettre pour la visualisation à l'opérateur station client (17), afin de rendre possible un contrôle et une observation de l'installation technique par un opérateur, dans lequel les informations de visualisation comprennent au moins une première image (1) et une deuxième image (9) de l'installation technique, dans lesquelles des représentations (2, 3, 4, 5, 6) numériques de composants de l'installation technique et des données (7, 8, 9) de mesure, qui leur appartiennent, sont représentées visuellement pour la commande et l'observation de l'installation technique ou peuvent l'être, le procédé comprenant :
a) représentation visuelle à l'opérateur de la première image (1) de l'installation par l'opérateur station client (17) ;
b) en réaction à l'apparition d'un évènement, représentation visuelle à l'opérateur de la deuxième image (9) de l'installation par l'opérateur station client (17), dans lequel une grandeur de représentation de la première image (1) de l'installation et de la deuxième image (9) de l'installation sont différentes l'une de l'autre, et dans lequel une grandeur de représentation de la deuxième image (9) de l'installation est, de préférence, plus petite qu'une grandeur de représentation de la première image (1) de l'installation.

12. Procédé suivant la revendication 11, dans lequel un évènement représente une instruction reçue de l'opérateur.

13. Procédé suivant la revendication 11, dans lequel un évènement représente un message arrivant dans l'installation technique, en particulier un message d'alerte.

14. Procédé suivant l'une des revendications 11 à 13, dans lequel la deuxième image (9) de l'installation peut être représentée dans une fenêtre d'image, qui est constituée déplaçable par l'opérateur sous la forme d'un affichage d'image représenté visuellement par l'opérateur station client (17).

15. Procédé suivant l'une des revendications 11 à 14, dans lequel la représentation visuelle de la deuxième image (9) de l'installation comprend une vue (12) d'ensemble par des messages d'alerte, qui sont affectés à l'installation technique par des composants compris par la deuxième image (9) de l'installation.
